# EUROPÄISCHE PATENTSCHRIFT

(11) **EP 1 893 885 B1**
(45) Veröffentlichungstag und Bekanntmachung des Hinweises auf die Patenterteilung: **10.06.2009**
(21) Anmeldenummer: 06754390.0
(22) Anmeldetag: 16.06.2006
(51) Int. Cl.: F16F 1/12, B60G 11/16, B60G 15/06

(54) **FEDERTELLER FÜR EINEN SCHWINGUNGSDÄMPFER**
SPRING PLATE FOR A VIBRATION DAMPER
CUVETTE DE RESSORT POUR AMORTISSEUR DE VIBRATIONS

(30) Priorität: 22.06.2005 DE 102005028761
(43) Veröffentlichungstag der Anmeldung: 05.03.2008
(73) Patentinhaber: ZF Friedrichshafen AG, 88046 Friedrichshafen (DE)
(72) Erfinder: LUTZ, Dieter, 97422 Schweinfurt (DE)
(86) Internationale Anmeldenummer: PCT/EP2006/005777
(87) Internationale Veröffentlichungsnummer: WO 2006/136326

(56) Entgegenhaltungen:
- EP-A- 1 443 238
- FR-A- 2 770 271
- US-A- 6 149 171
- US-B1- 6 273 407

## Beschreibung

### Technisches Gebiet

Die Erfindung betrifft einen Federteller für einen Schwingungsdämpfer gemäß dem Oberbegriff von Patentanspruch 1. Ein solcher Federteller ist in der FR-A-2770 271 beschrieben.

### Stand der Technik

Aus der EP 1 443 238 A1 ist ein Federteller für einen Schwingungsdämpfer bekannt, der eine Mehrzahl von Auflageflächen für eine Fahrzeugtragfeder aufweist. Zwischen den Auflageflächen besteht in Umfangsrichtung ein Abstand, so dass Freiräume vorliegen, die u. U. vorhandene maßliche Abweichungen der Fahrzeugtragfeder aufnehmen und damit kompensieren können. Des weiteren wird durch eine unterteilte Auflagefläche die Geräuschbildung der Fahrzeugtragfeder durch eine Reibbewegung auf der Auflagefläche minimiert.

Beschrieben werden zwei verschiedenen Möglichkeiten, die Auflageflächen zu realisieren. Zum einen besteht die Möglichkeit, dass der Federteller radial verlaufende Stege aufweist, auf denen die Auflageflächen ausgeformt sind. Diese Stege verfügen auch über einen außenseitigen Rand, der ein radiales Auswandern der Fahrzeugtragfeder von der Auflagefläche verhindern soll. Alternativ kann man auch einen in Umfangsrichtung geschlossenen Federteller vorsehen, z. B. gemäß der Fig. 9 und 10, und eine Kunststoffauflage mit segmentartigen Auflageflächen vorsehen. Der außenseitige Rand wird von der metallischen Tragfläche für die Kunststoffauflage gebildet.

### Darstellung der Erfindung

Aufgabe der vorliegenden Erfindung ist es, einen Federteller mit einer Mehrzahl von Auflageflächen für eine Fahrzeugtragfeder zu realisieren, wobei der Federteller sehr leicht und trotzdem hoch belastbar sein soll.

Erfindungsgemäß wird die Aufgabe dadurch gelöst, dass zumindest ein Teil der Auflageflächen als Einzelsegmente jeweils unabhängig von benachbarten Auflageflächen austauschbar sind.

Der große Vorteil besteht darin, dass man durch die Anwendung der Einzelsegmente mit wenigen Grundformen eine sehr große Variationsbreite hinsichtlich der Formgebung der Endwindung der Fahrzeugtragfeder erreichen kann. Des weiteren spart man ein großes Volumen an Werkstoff ein, der im Stand der Technik für die Verbindung zwischen den Auflageflächen notwendig ist.

Im Hinblick auf eine möglichst geringe Masse des Federträger ist vorgesehen, dass der Tragkörper radial verlaufende Stege aufweist, auf denen die Einzelsegmente angeordnet sind. Die stegartige Ausgestaltung des Tragkörper ermöglicht zusätzlich den Einsatz einer deutlich kleineren Blechplatine.

Gemäß einem Unteranspruch weisen die radial verlaufende Stege Halteflächen für die Einzelsegmente auf. Die Halteflächen werden von in Umfangsrichtung verlaufenden Stegelementen gebildet, die in Nuten der Einzelsegmente eingreifen. Damit ist ein radiale Fixierung der Einzelsegmente gewährleistet.

Zusätzlich stützen sich die Einzelsegmente in Umfangsrichtung zumindest einseitig an den radial verlaufenden Stegen des Tragkörpers ab.

Damit die Einzelsegmente insbesondere bei der Montage verliergesichert sind, ist der Tragkörper mit Durchgangsöffnungen für Befestigungsmittel der Einzelsegmente ausgeführt.

Die Auflageflächen sind als eine Rinne ausgeführt und führen damit die Fahrzeugtragfeder in beiden Richtungen radial.

Zusätzlich ist eine Auflagefläche mit einem Endanschlag für die Fahrzeugtragfeder ausgeführt.

Um bei einem Federbruch eine weiterhin eine Führung der Fahrzeugtragfeder zu erreichen, ist radial zu den Auflageflächen auf den Einzelsegmenten eine Federfangfläche ausgeführt.

Bei einem Federbruch tragen auch die Stege des Tragkörpers mit, indem diese mit Stützflächen ausgeführt sind, die zumindest teilweise dieselbe radiale Erstreckung wie die Federfangflächen der Einzelsegmente aufweisen.

Zur Gewichtseinsparung sind die Stützflächen des Tragkörpers mit mindestens einer Durchgangsöffnung versehen.

Im Hinblick auf eine maximale Festigkeit weist zumindest ein Teil der Stege des Tragkörpers einen u-förmigen Querschnitt auf. Zusätzlich kann zumindest zwischen zwei in Umfangsrichtung benachbarten Stegen des Tragkörpers eine rinnenartig ausgeformtes Verbindungssegment bestehen.

### Kurze Beschreibung der Zeichnungen

Anhand der folgenden Figurenbeschreibung soll die Erfindung näher erläutert werden.

Es zeigt:
- Fig. 1: räumliche Darstellung des Tragkörpers des erfindungsgemäßen Federtellers
- Fig. 2: Draufsicht des Federtellers
- Fig. 3: Schnitt durch den Federteller nach Fig. 2.

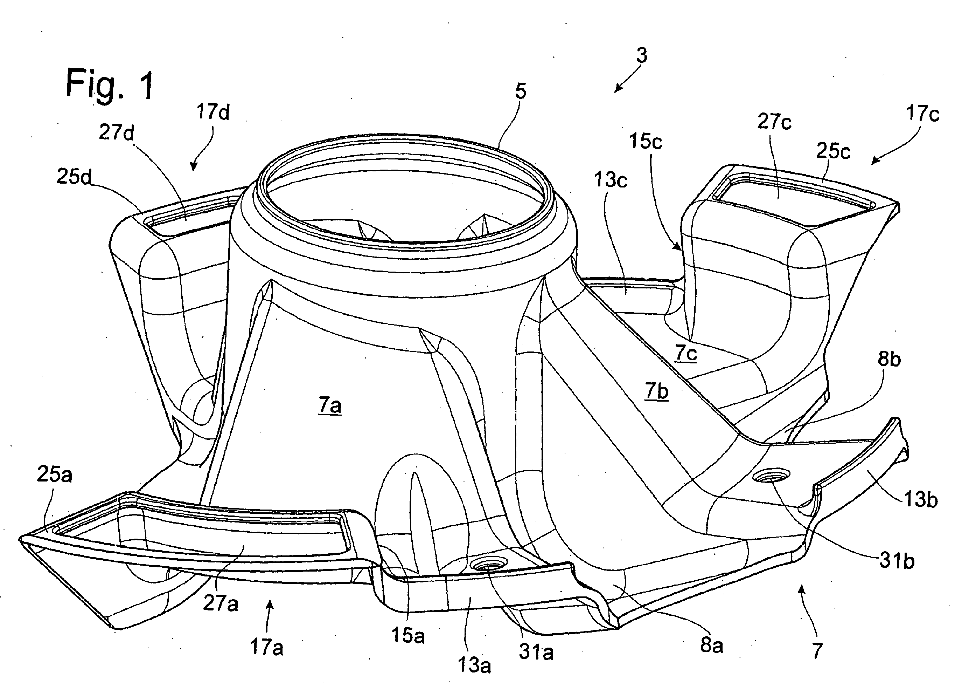

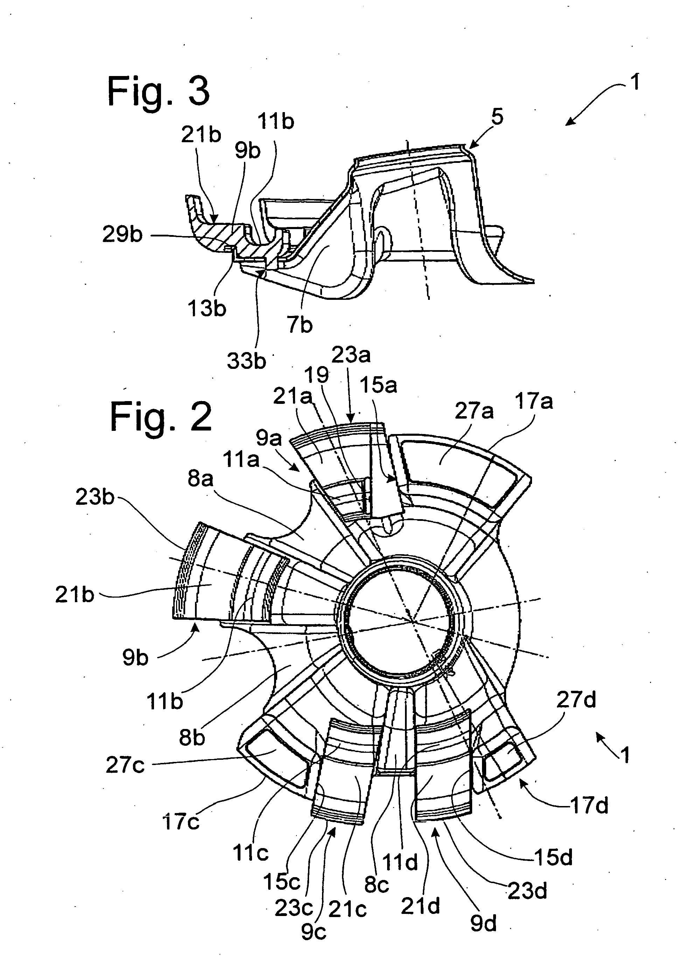

Die Zusammenschau der Fig. 1 bis 3 zeigt einen Federteller 1 mit einem metallischen Tragkörper 3, Fig. 2, der aus einem Blechrohling geformt ist. Der Tragkörper umfasst einen hülsenförmigen Grundkörper 5, der an einem Zylinder eines nicht dargestellten Schwingungsdämpfers befestigt wird. In Umfangsrichtung erstrecken sich radial verlaufende Stege 7. Die Stege weisen zumindest teilweise einen nach unten geöffneten u-förmigen Querschnitt auf. Zwischen zwei in Umfangsrichtung benachbarten Stegen, z. B. 7a; 7b, besteht ein rinnenartiges Verbindungselement 8a - 8. Die Verbindungselemente und die Stege bilden insgesamt ein wellenartiges Querschnittsprofil.

Auf den Stegen 7 des Tragkörpers sind Einzelsegmente 9a; 9b; 9c, 9d mit Auflageflächen 11 a - 11d von einander unabhängig und austauschbar angeordnet. Dafür weisen die radial verlaufenden Stege Befestigungsflächen in Form von in Umfangsrichtung verlaufenden Stegelementen 13a bis 13d auf. Des weiteren stützen sich die Einzelsegmente in Umfangsrichtung zumindest einseitig an Seitenflächen 15a - 15c der radial verlaufenden Stege 7a bis 7d ab, die in einen abgewinkelten Rand 17a - 17d übergehen.

Die Auflageflächen 11 a - 11 d sind als Rinne ausgeführt. Zusätzlich verfügt eine Auflauflagefläche 11a über einen Endanschlag 19 für die Fahrzeugtragfeder. Auf den Einzelsegmenten 9a - 9d sind radial zu den Auflageflächen 11a - 11 d in einer parallel versetzten Ebene Federfangflächen 21a - 21 d ausgeführt, die von einem umlaufenden Rand 23a - 23d radial außenseitig radial begrenzt wird und bei einem Bruch der Fahrzeugtragfeder ein Auswandern verhindert.

Auf den Rändern 17a - 17d sind Stützflächen 25a - 25d ausgeführt, die zumindest teilweise dieselbe Erstreckung aufweisen wie die Federfangflächen 21a - 21 d der Einzelsegmente 9a - 9d und in derselben horizontale Ebene liegen. Die Stützflächen 25a - 25d können mit Durchgangsöffnungen 27a - 27d versehen sein.

Beim Zusammenbau des Federtellers 1 werden die Einzelsegmente 9a - 9d in Abhängigkeit der Geometrie der Endwindung der Fahrzeugtragfeder auf den Stegen 7a - 7d des Tragkörpers 3 platziert, wobei die Stegelemente 13a - 13d in Nuten, z. B. 29b in Fig. 3, der Einzelsegmente eingreifen und für eine radiale Abstützung sorgen. Zusätzlich verfügen die Stege 7a - 7d über Durchgangsöffnungen 31 a; 31 b für zapfenförmige Befestigungsmittel 33b (Fig. 3) der Einzelsegmente 9a - 9d, so dass eine Verliersicherung vorliegt.

Insgesamt liegt ein sehr leichter und hochbelastbarer Federteller vor, dessen Einzelsegmente auch maßlich abweichende Fahrzeugtragfedern aufnehmen können.

## Patentansprüche

1. Federteller (1) für einen Schwingungsdämpfer, umfassend einen metallischen Tragkörper (5), auf dem eine Mehrzahl von separaten Auflageflächen (11a-11d) für eine Fahrzeugtragfeder angeordnet sind, die aus einem isolierenden Werkstoff bestehen, wobei die Auflageflächen (11a-11d) mit einem Rand (23a-23d) versehen sind, die ein radiales Auswandern der Fahrzeugtragfeder verhindern,
**dadurch gekennzeichnet,**
**dass** zumindest ein Teil der Auflageflächen (11 a- 11 d) als Einzelsegmente (9a-9d) jeweils unabhängig von benachbarten Auflageflächen austauschbar sind.

2. Federteller nach Anspruch 1,
**dadurch gekennzeichnet,**
**dass** der Tragkörper (3) radial verlaufende Stege (7a - 7d) aufweist, auf denen die Einzelsegmente (9a-9d) angeordnet sind.

3. Federteller nach Anspruch 2,
**dadurch gekennzeichnet,**
**dass** die radial verlaufende Stege (7a - 7d) Halteflächen (13a - 13d) für die Einzelsegmente (7a - 7d) aufweisen.

4. Federteller nach Anspruch 3,
**dadurch gekennzeichnet,**
**dass** die Halteflächen von in Umfangsrichtung verlaufenden Stegelementen (13a; 13d) gebildet werden, die in Nuten (29) der Einzelsegmente (9a - 9d) eingreifen.

5. Federteller nach Anspruch 2,
**dadurch gekennzeichnet,**
**dass** sich die Einzelsegmente (9a - 9d) in Umfangsrichtung zumindest einseitig an den radial verlaufenden Stegen (7a - 7d) des Tragkörpers (3) abstützen.

6. Federteller nach Anspruch 1,
**dadurch gekennzeichnet,**
**dass** der Tragkörper (3) mit Durchgangsöffnungen (31 a; 31 b) für Befestigungsmittel (33b) der Einzelsegmente (9a - 9d) ausgeführt ist.

7. Federteller nach Anspruch 1,
**dadurch gekennzeichnet,**
**dass** die Auflageflächen (11a - 11 d) als eine Rinne ausgeführt sind.

8. Federteller nach Anspruch 1,
**dadurch gekennzeichnet,**
**dass** eine Auflagefläche (11a) mit einem Endanschlag (19) für die Fahrzeugtragfeder ausgeführt ist.

9. Federteller nach Anspruch 1,
**dadurch gekennzeichnet,**
**dass** radial zu den Auflageflächen (11a - 11 d) auf den Einzelsegmenten (9a - 9d) eine Federfangfläche (21 a - 21 d) ausgeführt ist.

10. Federteller nach Anspruch 9,
**dadurch gekennzeichnet,**
**dass** die Stege (7a - 7d) des Tragkörpers (3) mit Stützflächen (25a - 25d) ausgeführt sind, die zumindest teilweise dieselbe radiale Erstreckung wie die Federfangflächen (21 a - 21 d) der Einzelsegmente (9a - 9d) aufweisen.

11. Federteller nach Anspruch 10,
**dadurch gekennzeichnet,**
**dass** die Stützflächen (25a - 25d) des Tragkörpers (3) mit mindestens einer Durchgangsöffnung (27a -27d) versehen sind.

12. Federteller nach Anspruch 2,
**dadurch gekennzeichnet,**
**dass** zumindest ein Teil der Stege (7a - 7d) des Tragkörpers (3) einen u-förmigen Querschnitt aufweisen.

13. Federteller nach Anspruch 2,
**dadurch gekennzeichnet,**
**dass** zumindest zwischen zwei in Umfangsrichtung benachbarten Stegen (7a-7d) des Tragkörpers (3) eine rinnenartig ausgeformtes Verbindungssegment (8a -8d) besteht.

## Claims

1. Spring plate (1) for a vibration damper, comprising a metallic carrying body (5) on which are arranged a plurality of separate supporting surfaces (11a-11d) for a vehicle suspension spring which consist of an insulating material, the supporting surfaces (11a-11d) being provided with a margin (23a-23d) preventing the vehicle suspension spring from creeping out radially, **characterized in that** at least some of the supporting surfaces (11a-11d) can be exchanged as individual segments (9a-9d) in each case independently of adjacent supporting surfaces.

2. Spring plate according to Claim 1, **characterized in that** the carrying body (3) has radially running webs (7a-7d), on which the individual segments (9a-9d) are arranged.

3. Spring plate according to Claim 2, **characterized in that** the radially running webs (7a-7d) have holding surfaces (13a-13d) for the individual segments (9a-9d).

4. Spring plate according to Claim 3, **characterized in that** the holding surfaces are formed by web elements (13a; 13d) which run in the circumferential direction and which engage into grooves (29) of the individual segments (9a-9d).

5. Spring plate according to Claim 2, **characterized in that** the individual segments (9a-9d) are supported in the circumferential direction, at least on one side, on the radially running webs (7a-7d) of the carrying body (3).

6. Spring plate according to Claim 1, **characterized in that** the carrying body (3) is designed with through-orifices (31a; 31b) for fastening means (33b) of the individual segments (9a-9d).

7. Spring plate according to Claim 1, **characterized in that** the supporting surfaces (11a-11d) are designed as a channel.

8. Spring plate according to Claim 1, **characterized in that** one supporting surface (11a) is designed with a limit stop (19) for the vehicle suspension spring.

9. Spring plate according to Claim 1, **characterized in that** a spring catching surface (21a-21d) is formed on the individual segments (9a-9d) radially with respect to the supporting surfaces (11a-11d).

10. Spring plate according to Claim 9, **characterized in that** the webs (7a-7d) of the carrying body (3) are designed with staying surfaces (25a-25d) which have at least partially the same radial extent as the spring catching surfaces (21a-21d) of the individual segments (9a-9d).

11. Spring plate according to Claim 10, **characterized in that** the staying surfaces (25a-25d) of the carrying body (3) are provided with at least one through-orifice (27a-27d).

12. Spring plate according to Claim 2, **characterized in that** at least some of the webs (7a-7d) of the carrying body (3) have a U-shaped cross section.

13. Spring plate according to Claim 2, **characterized in that** a connecting segment (8a-8d) of channel-like shape is present at least between two webs (7a-7d) of the carrying body (3) which are adjacent in the circumferential direction.

## Revendications

1. Cuvette de ressort (1) pour un amortisseur de vibrations, comprenant un corps porteur métallique (3), sur lequel sont disposées une pluralité de surfaces d'appui séparées (11a-11d) pour un ressort de support de véhicule, lesquelles se composent d'un matériau isolant, les surfaces d'appui (11a-11d) étant pourvues d'un bord (23a-23d) qui empêche une migration radiale du ressort de support de véhicule,
**caractérisée en ce**
**qu'**au moins une partie des surfaces d'appui (11a-11d) servant de segments individuels (9a-9d) peut être remplacée à chaque fois indépendamment par des surfaces d'appui adjacentes.

2. Cuvette de ressort selon la revendication 1,
**caractérisée en ce que**
le corps porteur (3) présente des nervures (7a-7d) s'étendant radialement, sur lesquelles sont disposés les segments individuels (9a-9d).

3. Cuvette de ressort selon la revendication 2,
**caractérisée en ce que**
les nervures (7a-7d) s'étendant radialement présentent des surfaces de retenue (13a-13d) pour les segments individuels (9a-9d).

4. Cuvette de ressort selon la revendication 3,
**caractérisée en ce que**
les surfaces de retenue sont formées par des éléments de nervure (13a ; 13d) s'étendant dans la direction périphérique, qui viennent en prise dans des rainures (29) des segments individuels (9a-9d).

5. Cuvette de ressort selon la revendication 2,
**caractérisée en ce que**
les segments individuels (9a-9d) s'appuient dans la direction périphérique au moins d'un côté sur les nervures (7a-7d) s'étendant radialement du corps porteur (3).

6. Cuvette de ressort selon la revendication 1,
**caractérisée en ce que**
le corps porteur (3) est réalisé avec des ouvertures de passage (31a ; 31b) pour des moyens de fixation (33b) des segments individuels (9a-9d).

7. Cuvette de ressort selon la revendication 1,
**caractérisée en ce que**
les surfaces d'appui (11a-11d) sont réalisées sous forme de rigole.

8. Cuvette de ressort selon la revendication 1,
**caractérisée en ce**
**qu'**une surface d'appui (11a) est réalisée avec une butée de fin de course (19) pour le ressort de support de véhicule.

9. Cuvette de ressort selon la revendication 1,
**caractérisée en ce**
**qu'**une surface de capture de ressort (21a-21d) est réalisée radialement aux surfaces d'appui (11a-11d) sur les segments individuels (9a-9d).

10. Cuvette de ressort selon la revendication 9,
**caractérisée en ce que**
les nervures (7a-7d) du corps porteur (3) sont réalisées avec des surfaces de support (25a-25d), qui présentent au moins en partie la même étendue radiale que les surfaces de capture de ressort (21a-21d) des segments individuels (9a-9d).

11. Cuvette de ressort selon la revendication 10,
**caractérisée en ce que**
les surfaces de support (25a-25d) du corps porteur (3) sont pourvues d'au moins une ouverture de passage (27a-27d).

12. Cuvette de ressort selon la revendication 2,
**caractérisée en ce**
**qu'**au moins une partie des nervures (7a-7d) du corps porteur (3) présente une section transversale en forme de U.

13. Cuvette de ressort selon la revendication 2,
**caractérisée en ce que**
qu'au moins entre deux nervures (7a-7d) du corps porteur (3) adjacentes dans la direction périphérique, existe un élément de connexion (8a-8d) en forme de rigole.
